# EUROPÄISCHE PATENTSCHRIFT

(11) **EP 0 502 823 B1**
(45) Veröffentlichungstag und Bekanntmachung des Hinweises auf die Patenterteilung: **11.10.1995**
(21) Anmeldenummer: 92810145.0
(22) Anmeldetag: 27.02.1992
(51) Int. Cl.: D03J 1/00, F16N 7/32

(54) **Einrichtung zum taktweisen Schmieren mittels eines Schmiermittelnebels**
Device for intermittent lubrification by a lubricating fog
Dispositif de lubrification par intermittence à l'aide d'un brouillard de lubrificant

(30) Priorität: 05.03.1991 CH 661/91
(43) Veröffentlichungstag der Anmeldung: 09.09.1992
(73) Patentinhaber: SULZER RÜTI AG, CH-8630 Rüti (CH)
(72) Erfinder: Pfarrwaller, Erwin, CH-8405 Winterthur (CH); Lehn, Rudolf, CH-8180 Bülach (CH)
(74) Vertreter: Heubeck, Bernhard

(56) Entgegenhaltungen:
- CH-B- 620 253
- DE-A- 3 131 699
- DE-B- 947 275
- US-A- 4 653 610

## Beschreibung

Die Erfindung betrifft eine Einrichtung zum Schmieren von mindestens einem beweglichen Teil, gemäss dem Oberbegriff des Anspruches 1.

Eine Einrichtung dieser Art ist aus der DE-A 3131699 bekannt. Bei diese Einrichtung ist eine Verteilerscheibe mit einem Verteilerstück in einem Gehäuse mit einem oberen und unteren Deckel so angeordnet, dass eine erste und zweite dichte Kammer gebildet werden und das Verteilstück dichtend über den unteren Deckel gleitet. Die Verteilerscheibe wird mittels eines regelbaren Antriebes gleichmässig oder im Takt gedreht. Die erste Kammer ist ständig mit Oelnebel unter Überdruck gefüllt, während die zweite Kammer ständig mit reiner Luft unter Überdruck gefüllt ist. Die zweite Kammer weist eine Mehrzahl von Bohrungen auf, die über Schlauchleitungen mit den Schmierstellen verbunden sind. In der Verteilerscheibe und dem Verteilerstück ist eine Bohrung vorgesehen, welche die Bohrungen der zweiten Kammer der Reihe nach mit der ersten Kammer verbindet. Mit dieser Einrichtung wird jede Schmierstelle pro Umdrehung der Verteilscheibe mit Oelnebel versorgt und während der übrigen Zeit wird Luft auf die Schmierstelle geblasen. Die Anblasung der Schmierstelle hat den Nachteil, dass das Oel über die Schmierstelle hinaus verteilt wird. Insbesondere bei Webmaschinen führt diese Verteilung zur Verschmutzung des hergestellten Gewebes.

Hier will die Erfindung Abhilfe schaffen. Die Erfindung, wie sie in den Ansprüchen gekennzeichnet ist, löst die Aufgabe, eine Schmiereinrichtung zu schaffen, die im Takt der Maschine lediglich ein Schmiermittelnebel auf die zu schmierenden Teile abgibt, wobei der Schmiermittelbedarf auf die jeweilige Schmierstelle abgestimmt ist.

Ein Ausführungsbeispiel der Erfindung ist in der folgenden Beschreibung anhand der Zeichnung näher erläutert. Es zeigen:
- Fig. 1: in einem schematisch vereinfachten Schnitt eine Schmiereinrichtung mit fünf Schmierstellen,
- Fig. 2a u. 2b: ein und denselben Schnitt durch den Verteiler, in verschiedenen Verteilerstellungen und
- Fig. 3: einen Querschnitt durch den Verteiler an einer anderen Stelle als in Fig. 2a und 2b.

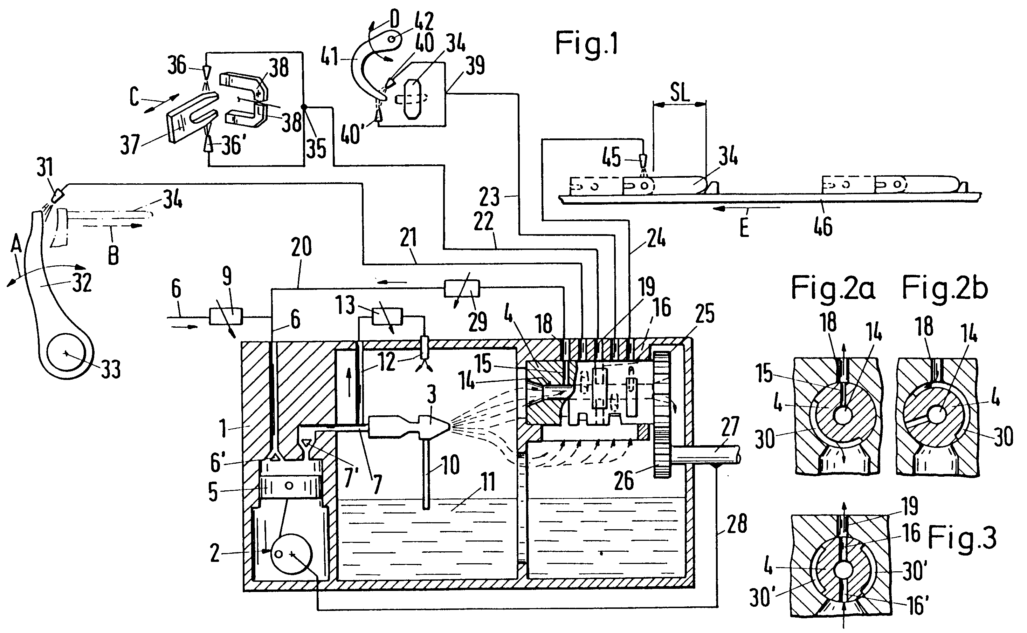

Gemäss Fig. 1 weist die Schmiereinrichtung ein Gehäuse 1 auf, in dem eine Luftpumpe 2, ein Nebelerzeuger 3 und ein Verteiler 4 untergebracht sind. Die Luftpumpe 2 ist eine kurbelgetriebene Kolbenpumpe, deren Kolben 5 beim Abwärtshub Luft über eine Leitung 6 ansaugt und beim Aufwärtshub über eine Leitung 7 mit einem Druck zwischen 80 und 160 mbar dem Nebelerzeuger 3 zuführt. Die von der Luftpumpe 2 angesaugte Luftmenge ist mit Hilfe einer Ansaugluftdrossel 9 einstellbar, die - abweichend von der Darstellung in Fig. 1 - im Gehäuse 1 integriert ist. Die in Fig. 1 schematisch angedeuteten Ventile 6' und 7' in der Leitung 6 bzw. 7 sind als federbelastet Kugelventile ausgebildet.

Der Nebelerzeuger 3 ragt mit einem Rohr 10 in ein Schmierölbad 11, das sich im unteren Teil des Gehäuses 1 befindet. Die von der Luftpumpe 2 geförderte Luft durchströmt den ejektorartig ausgebildeten Nebelerzeuger 3 und saugt dabei über das Rohr 10 Schmieröl an, das bei dem Austreten aus dem düsenartigen Mundstück des Nebelerzeugers sich in feine Tröpfchen auflöst und im Luftstrom fein verteilt. Um den Anteil der Nebeltröpfchen in der Luft zu variieren, ist an der Leitung 7 eine Bypassleitung 12 angeschlossen, die also einen Teil der von der Luftpumpe 2 geförderten Luft an dem Nebelerzeuger 3 vorbeiführt. In der Bypassleitung 12 ist eine Drosselvorrichtung 13 vorgesehen, die wie die Ansaugluftdrossel 9 im Gehäuse 1 integriert ist.

In Fig. 1 rechts vom Nebelerzeuger 3 ist im Gehäuse 1 der walzenartige, rotierende Verteiler 4 gelagert, der eine durchgehende zentrale Bohrung 14 aufweist, die an beiden Enden kegelig erweitert ist. Von der Bohrung 14 zweigen so viele radiale Bohrungen 15 und 16 ab, wie Schmierstellen vorhanden sind. Die radialen Bohrungen 15, 16 korrespondieren jeweils mit einer Bohrung 18 bzw. 19 an der Oberseite des Gehäuses 1, an denen je eine Leitung 20 bis 24 angeschlossen ist, die zu den verschiedenen Schmierstellen führen. Auf der den Bohrungen 18 und 19 gegenüberliegenden Seite ist das Gehäuse 1 zum Schmierölbad 11 hin offen.

Das in Fig. 1 rechte Ende des Verteilers 4 ist mit einem Zahnkranz 25 versehen, das mit einem Ritzel 26 im Eingriff steht, das über eine Welle 27 mit einer bestimmten Drehzahl angetrieben wird. Die Welle 27 kann die Antriebswelle der nicht gezeigten Maschine sein. Die Drehzahl richtet sich nach dem Anwendungsgebiet der Schmiereinrichtung und ist bei dem gezeigten Ausführungsbeispiel, in dem Schmierstellen einer Projektil-Web-maschine versorgt werden, halb so gross, wie die Drehzahl der Antriebswelle der Webmaschine. Von der Welle 27 ist auch der Antrieb für die Luftpumpe 2 abgeleitet, was durch die Linie 28 angedeutet ist.

Wie Fig. 2a und 2b deutlicher als Fig. 1 zeigen, ist in der Ebene, in der sich die radiale Bohrung 15 erstreckt, in den Verteiler 4 eine Nut 30 eingearbeitet, die sich etwa über drei Viertel des Umfangs des Verteilers erstreckt, ohne mit der Bohrung 15 zu kommunizieren. Die Nut 30 dient dazu, in der Bohrung 18 und der daran angeschlossenen Leitung niedergeschlagenes Oel in das Schmierölbad 11 zurückzuführen.

Bei der Anordnung gemäss Fig. 3 ist, fluchtend zu der radialen Bohrung 16, eine weitere Bohrung 16′ vorgesehen, die einerseits dazu dient, den Schmiertakt zu verdoppeln, d.h. pro Umdrehung des Verteilers 4 die an die Bohrung 19 angeschlossene Schmierstelle zweimal mit Oelnebel zu versorgen. Andererseits dient die zusätzliche Bohrung 16′ auch dazu, der Bohrung 16 ausser dem über die zentrale Bohrung 14 zugeführten Oelnebel zusätzlich noch Oelnebel aus dem Raum über dem Oelbad 11 zuzuführen. Die gleiche Funktion hat dann auch die radiale Bohrung 16, wenn siein Fig. 3 um 180° weitergedreht - unten steht und dann die Bohrung 16′ mit der Bohrung 19 kommuniziert. Da hier also zwei radiale Bohrungen in derselben Ebene angeordnet sind, sind in diesem Beispiel zwei Umfangsnuten 30′ im Verteiler 4 vorgesehen, die sich je über gut ein Viertel des Umfangs des Verteilers erstrecken. Entspechend den Beispielen nach Fig. 2 und 3 sind auch in den Ebenen der übrigen radialen Bohrungen des Verteilers 4 Umfangsnuten angeordnet. Es ist auch möglich, im Verteiler 4 zusätzliche Querbohrungen (ähnlich der Bohrung 16′) vorzusehen, die der ihr zugeordneten radialen Bohrung 15 oder 16 Schmierölnebel zuführen, ohne dass die zusätzlichen Bohrungen mit Bohrungen 18 oder 19 kommunizieren, wenn sie sich in ihrer oberen Stellung befinden.

Gemäss Fig. 1 mündet die Leitung 20 in die Ansaugleitung 6 der Luftpumpe 2, so dass auch der Luftpumpe taktweise Schmierölnebel zugeführt wird, durch den sowohl das Ansaugventil 6′ als auch der Kolben 5 mit Schmieröl versehen werden. In der Leitung 20 ist eine Drosselvorrichtung 29 zum Dosieren der Oelnebelmenge angeordnet.

Die Leitung 21 mündet in eine Düse 31, die auf die Berührungsfläche eines Schlagfingers 32 gerichtet ist, der um eine Achse 33 schwenkbar ist (Doppelpfeil A) und bei der Schwenkbewegung nach rechts das strichpunktiert gezeichnete Projektil 34 in das nicht gezeichnete Webfach schiesst (Pfeil B). Beim Abschiessen kommt die Berührungsfläche des Schlagfingers 32 mit dem Projektil 34 in Berührung. In der in Fig. 1 mit ausgezogenen Linien gezeichneten Stellung des Schlagfingers 32 wird deshalb ein Oelnebelimpuls mittels der Düse 31 der Berührungsfläche zugeführt.

Die Leitung 22 gabelt sich an der Stelle 35 und führt dann zu zwei Düsen 36 und 36′, die je auf eine Gleitfläche eines Rückholer-Klammeröffners 37 gerichtet sind, der sich in Richtung des Doppelpfeiles C geradlinig hin und her bewegt und bei der Bewegung in Fig. 1 nach rechts zwischen die Zangen 38 des Fadenrückholers eindringt und diesen dabei öffnet. Die beiden Gleitflächen des Klammeröffners 37 erhalten einen Oelnebelimpuls, wenn der Klammeröffner sich in der gezeichneten zurückgezogenen Stellung befindet. Da die Leitung 22 mit der Stelle des Verteilers 4 zusammenwirkt, an der dieser zwei radiale Bohrungen 16 und 16′ (Fig. 3) aufweist, erhalten die Gleitflächen des Klammeröffners 37 zweimal pro Umdrehung des Verteilers 4 einen Oelnebelimpuls.

Die Leitung 23 gabelt sich ebenfalls an der Stelle 39 und führt zu zwei Düsen 40 und 40′, die auf je eine Gleitfläche an einem Projektilklammeröffner 41 gerichtet sind, der um eine Achse 42 schwenkbar ist (Doppelpfeil D). In der in Fig. 1 gezeigten, ausgeschwenkten Stellung des Projektilklammeröffners erhalten seine beiden Gleitflächen von den zugeordneten Düsen 40 und 40′ einen Oelnebelimpuls. Die Stellung, in der der Projektilklammeröffner 41 das Projektil 34 geöffnet hat, ist strichpunktiert dargestellt.

Die Leitung 24 führt zu einer Düse 45, die über der Fördereinrichtung 46 angeordnet ist, mit der die Projektile nach dem Verlassen des Webfachs zum nicht gezeichneten Schusswerk zurückgebracht werden. Während dieses Transportes wird mit Hilfe der Düse 45 die Gleitfläche jedes Projektils 34 mit Oelnebel geschmiert, und zwar während der Länge SL. Diese Länge SL ist kürzer als die Länge des gesamten Projektils, um zu vermeiden, dass der in Richtung des Pfeiles E vorne liegende Klammerteil des Projektils vom Oelnebel beaufschlagt wird. Mit diesem Klammerteil wird später der in das Fach einzutragende Faden erfasst, der möglichst nicht mit Oel in Berührung kommen soll.

Durch die Lage der radialen Kanäle 15 und 16 im Verteiler 4 in Verbindung mit den mit ihnen kommunizierenden Bohrungen 18 bzw. 19 ist der Beginn der Schmierölnebelzufuhr zu den entsprechenden Schmierstellen in Abhängigkeit von der Stellung der Antriebswelle 27 festgelegt. Die Dauer der Schmierölnebelzufuhr ist abhängig von der Querschnittsbemessung der Bohrungen 15 und 16. Wenn die Dauer länger als im gezeichneten Beispiel sein soll, so werden die Mündungen der Kanäle 15 und 16 in der Mantelfläche des Verteilers 4 vergrössert, und zwar durch Erweitern der Mündung in Umfangsrichtung des Verteilers, so dass dort Nuten entstehen können. In einem solchen Falle wären dann die Nuten 30 und 30′ entsprechend zu kürzen, um eine Verbindung mit der erweiterten Bohrung zu verhindern.

Abweichend vom gezeichneten Ausführungsbeispiel ist es auch möglich, das Oelbad 11 in bezug auf den Nebelerzeuger 3 so im Gehäuse anzuordnen, dass das Oel dem Ejektor des Nebelerzeugers direkt zuläuft. In diesem Fall ist also kein Saugrohr 10 notwendig. Eine andere Variante besteht darin, am unteren Ende des Rohres 10 Fördermittel vorzusehen, die das Oel dem Nebelerzeuger zuführen, z.B. eine Zahnradpumpe. Der Antrieb für diese Pumpe kann - wie der der Luftpumpe 2 - von der Welle 27 abgeleitet sein.

## Patentansprüche

1. Einrichtung zum Schmieren von mindestens einem beweglichen Teil (32, 34, 37, 41), der mindestens eine zu schmierende Gleitfläche aufweist und von einer Antriebswelle (27) einer Maschine bewegbar ist, insbesondere für Webmaschinen, welche Einrichtung einen rotierender Verteiler (4), der einerseits mit einem Nebelerzeuger (3) und andererseits mit mindestens einer Düse (31, 36, 40, 45) in Verbindung steht und ein Gehäuse (1) aufweist, in welchem der Verteiler (4) gelagert ist und das mindetens eine Öffnung (18) aufweist, die über eine Verbindungsleitung (21-24) mit der Düse verbunden ist dadurch gekennzeichnet, dass der Verteiler in Abhängigheit von der Antriebswelle rotiert und einen durchgehenden Hauptkanal (14), der Zentral und in Längsrichtung des Verteilers ausgebildet ist und mindestens einen Verteilkanal (15, 16) mit einer Eingangsöffnung im Hauptkanal und einer Ausgangsöffnung in der Mantelfläche aufweist, der mit der Öffnung (18) im Gehäuse (1) in Verbindung bringbar ist, um der Düse über die Verbindungsleitung (21-24) Schmiermittelnebel zuzuführen.

2. Einrichtung nach Anspruch 1 dadurch gekennzeichnet, dass der Verteiler (4) ein zylindrischer Körper ist, und dass der Hauptkanal (14) in der Zylinderachse liegend und der Verteilkanal (15, 16) radial dazu verlaufend ausgebildet ist.

3. Einrichtung nach einem der Ansrpüche 1 oder 2, dadurch gekennzeichnet, dass ein Sammelraum für das Schmiermittel im unteren Bereich und unterhalb des Verteilers (4) des Gehäuses vorgesehen ist und dass der Nebelerzeuger (3) ein Saugrohr (10) aufweist, das in den Sammelraum ragt.

4. Einrichtung nach Anspruch 1 bis 3, dadurch gekennzeichnet, dass eine Pumpe (2) zum Verdichten des gasförmigen Mediums im Gehäuse (1) angeordnet ist und dass ein gemeinsamer Antrieb (27) für die Pumpe (2) und den Verteiler (4) vorgesehen ist.

5. Einrichtung nach einem der Ansprüche 1 bis 4, dadurch gekennzeichnet, dass das Gehäuse (1) im Bereich des Verteilers (4) zum Schmiermittelsammelraum (11) hin offen ist und dass der Verteiler (4) jeweils in der Ebene, in der ein Verteilkanal (15, 16) ausgebildet ist, eine Nut (30) aufweist, die in Umfangsrichtung verläuft, und mit dem Verteilkanal (15, 16) nicht in Verbindung steht.

6. Einrichtung nach einem der Ansprüche 1 bis 5, dadurch gekennzeichnet, dass eine Mehrzahl von Verteilkanälen (15, 16) im Verteiler (4) vorgesehen sind, dass das Gehäuse (1) im Bereich des Verteilers (4) zum Schmiermittelsammelraum (11) hin offen ist und dass Hilfskanäle im Verteiler (4) vorgesehen sind, um Schmiermittelnebel aus dem Raum oberhalb des Schmiermittelsammelraums (11) zum Hauptkanal (14) zu führen.

7. Einrichtung nach einem der Ansprüche 1 bis 6, dadurch gekennzeichnet, dass eine Ansaugdrossel (9) im Ansaugkanal (6) der Pumpe (7) für das gasförmige Medium angeordnet ist.

8. Einrichtung nach einem der Ansprüche 1 bis 7, dadurch gekennzeichnet, dass der Nebelerzeuger (3) mit einer Bypassleitung (12) versehen ist, in der ein Mengeneinstellorgan (13) angeordnet ist.

9. Einrichtung nach einem der Ansprüche 1 bis 8, dadurch gekennzeichnet, dass eine Schmiermittelnebelführende Verbindungsleitung (20) vorgesehen ist, die den Verteiler (4) mit der Ansaugleitung (6) der Pumpe (7) verbindet.

10. Einrichtung nach einem der Ansprüche 1 bis 9, dadurch gekennzeichnet, dass der Hauptkanal (14) an seinem der Einströmseite abgewendeten Ende offen ist und an beiden Enden konisch erweiterte Abschnitte aufweist.

## Claims

1. An arrangement for lubricating at least one movable part (32, 34, 37, 41) which has at least one slideway requiring lubrication and is movable by a drive shaft (27) of a machine, more particularly for weaving machines, the arrangement comprising a rotating distributor (4), which is connected, on the one hand, to a mist generator (3) and, on the other hand, to at least one nozzle (31, 36, 40, 45), and a housing (1) in which the distributor (4) is mounted and which has at least one opening (18) connected to the nozzle via a connecting conduit (21 - 24), characterised in that the distributor rotates in dependence on the drive shaft and has a continuous main duct (14) which is formed centrally and in the longitudinal direction of the distributor and has at least one distribution duct (15, 16) with an inlet opening in the main duct and an outlet opening in the outer surface, said distribution duct being adapted to be brought into communication with the opening (18) in the housing (1) in order to supply lubricant mist to the nozzle via the connecting conduit (21 - 24).

2. An arrangement according to claim 1, characterised in that the distributor (4) is a cylindrical member and in that the main duct (14) is constructed to be situated on the cylinder axis and the distribution duct (15, 16) extends radially thereto.

3. An arrangement according to claim 1 or 2, characterised in that a collecting chamber is provided for the lubricant in the bottom zone and beneath the distributor (4) of the housing and in that the mist generator (3) comprises a suction tube (10) which projects into the collecting chamber.

4. An arrangement according to any one of claims 1 to 3, characterised in that a pump (2) is disposed in the housing (1) to compress the gaseous medium and in that a common drive (27) is provided for the pump (2) and the distributor (4).

5. An arrangement according to any one of claims 1 to 4, characterised in that the housing (1) is open towards the lubricant collecting chamber (11) in the region of the distributor (4) and in that the distributor (4) has, in each plane in which a distribution duct (15, 16) is formed, a groove (50) which extends in the peripheral direction and which does not communicate with the distribution duct (15, 16).

6. An arrangement according to any one of claims 1 to 5, characterised in that a plurality of distribution ducts (15, 16) are provided in the distributor (4), in that the housing (1) is open towards the lubricant collecting chamber (11) in the region of the distributor (4) and in that auxiliary ducts are provided in the distributor (4) in order to guide lubricant mist to the main duct (14) from the space above the lubricant collecting chamber (11).

7. An arrangement according to any one of claims 1 to 6, characterised in that an intake restrictor (9) is disposed in the intake duct (6) of the pump (7) for the gaseous medium.

8. An arrangement according to any one of claims 1 to 7, characterised in that the mist generator (3) is provided with a bypass conduit (12) in which a flow adjusting means (13) is provided.

9. An arrangement according to any one of claims 1 to 8, characterised in that a lubricant mist carrying connecting conduit (20) is provided which connects the distributor (4) to the intake conduit (6) of the pump (7).

10. An arrangement according to any one of claims 1 to 9, characterised in that the main duct (14) is open at its end remote from the entry side and has conically widened portions at both ends.

## Revendications

1. Dispositif de graissage d'au moins une pièce mobile (32, 34, 37, 41) comportant au moins une surface de glissement à graisser et pouvant être déplacé par l'arbre d'entraînement (27) d'une machine, en particulier pour des métiers à tisser, ledit dispositif comportant un distributeur tournant (4) relié, d'une part, à un nébuliseur (3) et, d'autre part, à au moins une buse (31, 36, 40, 45), et comportant un boîtier (1) dans lequel le distributeur (4) est monté et qui comporte au moins une ouverture (18) reliée à la buse par une conduite de liaison (21 à 24), caractérisé en ce que le distributeur est mis en rotation en fonction de l'arbre d'entraînement et comporte un canal principal débouchant (14), ménagé au centre et dans le sens longitudinal du distributeur, et au moins un canal distributeur (15, 16) qui possède une ouverture d'entrée dans le canal principal et une ouverture de sortie dans l'aire latérale et qui peut être mis en communication avec l'ouverture (18) du boîtier (1) afin d'alimenter la buse en brouillard lubrifiant par l'intermédiaire de la conduite de liaison (21 à 24).

2. Dispositif selon la revendication 1, caractérisé en ce que le distributeur (4) est un corps cylindrique, et en ce que le canal principal (14) coïncide avec l'axe du cylindre, et le canal distributeur (15, 16) s'étend radialement par rapport à lui.

3. Dispositif selon l'une des revendications 1 ou 2, caractérisé en ce qu'un collecteur de lubrifiant est prévu dans la zone inférieure et en dessous du distributeur (4) du boîtier, et en ce que le nébuliseur (3) comporte un tube d'aspiration (10) plongeant dans le collecteur.

4. Dispositif selon la revendication 1 à 3, caractérisé en ce qu'une pompe (2) est disposée dans le boîtier (1) pour comprimer le milieu gazeux, et en ce qu'il est prévu un dispositif d'entraînement (27) commun à la pompe (2) et au distributeur (4).

5. Dispositif selon l'une des revendications 1 à 4, caractérisé en ce que, dans la zone du distributeur (4), le boîtier (1) est ouvert en direction du collecteur de lubrifiant (11), et en ce que le distributeur (4) comporte, dans le plan où est ménagé un canal distributeur (15, 16), une gorge (30) qui s'étend dans le sens circonférentiel et qui ne communique pas avec le canal distributeur (15, 16).

6. Dispositif selon l'une des revendications 1 à 5, caractérisé en ce qu'une pluralité de canaux distributeurs (15, 16) sont prévus dans le distributeur (4), en ce que le boîtier (1) est ouvert dans la zone du distributeur (4) en direction du collecteur de lubrifiant (11), et en ce que des canaux auxiliaires sont prévus dans le distributeur (4) pour transférer du brouillard lubrifiant de l'espace situé au-dessus du collecteur de lubrifiant (11) vers le canal principal (14).

7. Dispositif selon l'une des revendications 1 à 6, caractérisé en ce qu'un dispositif d'étranglement d'aspiration (9) destiné au milieu gazeux est implanté sur le canal d'aspiration (6) de la pompe (7).

8. Dispositif selon l'une des revendications 1 à 7, caractérisé en ce que le nébuliseur (3) est muni d'une conduite de dérivation (12), sur laquelle est implanté un organe de réglage de débit (13).

9. Dispositif selon l'une des revendications 1 à 8, caractérisé en ce qu'il est prévu une conduite de liaison (20) qui transporte du brouillard lubrifiant et qui relie le distributeur (4) à la conduite d'aspiration (6) de la pompe (7).

10. Dispositif selon l'une des revendications 1 à 9, caractérisé en ce que le canal principal (14) est ouvert à son extrémité opposée au côté entrée et comporte des sections évasées coniques à ses deux extrémités.
